# FASCICULE DE BREVET EUROPEEN

(11) **EP 0 566 464 B1**
(45) Date de publication et mention de la délivrance du brevet: **16.09.1998**
(21) Numéro de dépôt: 93400942.4
(22) Date de dépôt: 09.04.1993
(51) Int. Cl.: H04B 10/18, G02F 1/35

(54) **Source d'impulsion optique et système de transmission optique à solitons comportant cette source**
Quelle für optische Pulse und optisches Solitonübertragungssystem mit dieser Quelle
Optical pulse source and optical soliton transmission system with such a source

(30) Priorité: 15.04.1992 FR 9204652
(43) Date de publication de la demande: 20.10.1993
(73) Titulaire: ALCATEL ALSTHOM COMPAGNIE GENERALE D'ELECTRICITE, 75008 Paris (FR)
(72) Inventeur: Chesnoy, Jose, F-74014 Paris (FR)
(74) Mandataire: Bourely, Paul

(56) Documents cités:
- OPTICS LETTERS. vol. 15, no. 10, 15 Mai 1990, NEW YORK US pages 588 - 590 M. NAKAZAWA ET AL 'Generation and transmission of optical solitons in the gigahertz region using a directly modulated distributed-feedback laser diode'
- ELECTRONICS LETTERS. vol. 20, no. 3, 2 Février 1984, STEVENAGE GB pages 132 - 133 S.K.KOROTKY ET AL '14 Gbit/s optical signal encoding for l=1,32 micrometer with double pulse drive of a Ti: LiNb03 waveguide modulator'

## Description

La présente invention concerne la formation d'impulsions optiques brèves, utilisables notamment pour une transmission d'information sur une fibre optique. On sait que l'action combinée des effets optiques dispersifs et non linéaires de type Kerr introduits par une telle fibre permet à des impulsions brèves de forme convenable, appelées impulsions "Solitons", de se propager sans déformation. C'est pourquoi l'utilisation de telles impulsions est envisagée dans les transmissions transocéaniques (6000 - 9000 km) à haut débit. Les grandes distances de transmission sont atteintes par la propagation des solitons dans des fibres dont les pertes sont compensées par des amplificateurs optiques à fibres dopées à l'erbium.

La transmission par solitons nécessite de disposer d'un train d'impulsions lumineuses brèves émises périodiquement. Par exemple, pour une transmission à 10 Gbit/s, les impulsions doivent mesurer environ 20 ps, (à mi intensité). De plus ces impulsions doivent être proches de la "limite de transformée de Fourier", c'est-à-dire que le produit de leur durée par leur largeur spectrale doit être inférieure à une limite d'environ 0,7;

Selon une première méthode connue on peut générer de telles impulsions par couplage de modes d'un laser à semiconducteur à cavité externe. Cette méthode a été décrite par D.M. BIRD, R.M. FATAH, M.K. COX, P.D. CONSTANTINE.. Electronics letter 26, p. 2086 (1990). Une deuxième méthode connue utilise une commutation du gain d'un laser à semiconducteur monolithique et a été décrite par L.M. DOWNEY, J.F. BOWERS, R.S. TUCKER and E. AGYEKUM IEEE, J. Quant. Elec. QE 23, 1039 (1987).

La première méthode nécessite un laser complexe dont l'utilisation est délicate et donc difficilement envisageable sur le terrain. La seconde permet d'émettre des impulsions brèves, mais très éloignées de la limite de Fourier. La recompression nécessite une fibre à dispersion anormale de très grande longueur (plusieurs km), et il n'est pas certain que l'impulsion finalement obtenue satisfasse aux conditions de propagation d'un soliton. Un filtrage spectral permet cependant d'obtenir des impulsions satisfaisantes. Ceci est indiqué dans deux articles de M. NAKAZAMA, K. SUZUKI and Y. KIMURA dans Optics Letters vol. 15, P. 715 et n°10, Pages 588-590 (1990).

Mais l'efficacité de ce filtrage est subordonnée à un centrage critique du dispositif de filtrage.

La présente invention a notamment pour but de s'affranchir des inconvénients de ces méthodes connues.

Et dans ce but elle a notamment pour objet une source d'impulsion optique caractérisée par le fait qu'elle comporte un modulateur électro-optique recevant une onde lumineuse et présentant une courbe caractéristique à seuil pour transmettre une impulsion optique de durée inférieure à celle d'une impulsion de commande électrique qui lui est appliquée.

La figure 1 représente un système de transmission utilisant une source selon cette invention.

La figure 2 représente la courbe caractéristique d'un modulateur à électroabsorption utilisé dans cette source.

La figure 3 représente une impulsion de commande et une impulsion optique de cette source.

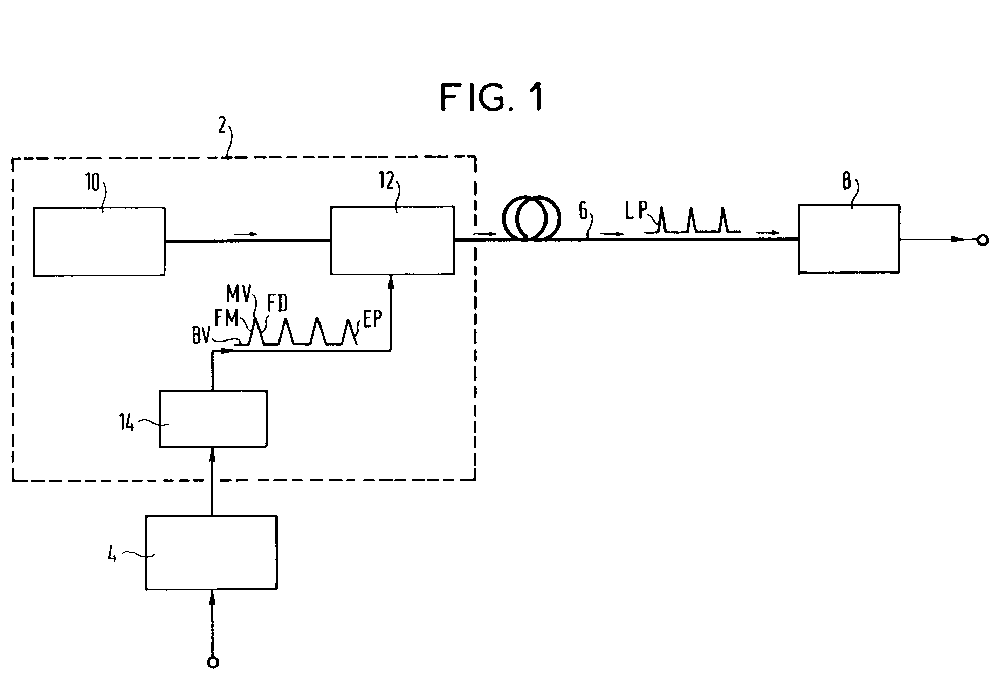

Conformément à la figure 1 un système de transmission comporte les éléments connus suivants :
- Une source d'impulsion optique 2 pour fournir une impulsion optique LP chaque fois qu'elle est commandée pour cela.
- Un circuit d'entrée 4 recevant une information à transmettre et commandant cette source pour lui faire fournir une succession d'impulsions optiques dans laquelle les décalages temporels entre les impulsions successives sont représentatifs de l'information à transmettre. Cette information peut notamment être représentée sous forme binaire par le fait que des impulsions sont présentes ou absentes à des instants formant une suite régulière de pas prédéterminé ce qui fait apparaître, entre impulsions successives, des décalages temporels égaux tantôt à ce pas tantôt à un multiple de ce pas.
- Une fibre de ligne 6 constituée par une fibre optique de grande longueur recevant ladite succession d'impulsions optiques et présentant d'une part une dispersion chromatique, d'autre part un effet Kerr. On sait que, dans une telle fibre, cette dispersion et cet effet Kerr se compensent mutuellement pour conserver la forme d'une impulsion optique lorsque cette impulsion présente une intensité, une durée et une largeur spectrale caractéristiques d'un soliton de cette fibre.
   - Enfin un récepteur 8 recevant les impulsions optiques transmises par la fibre de ligne et traitant ces impulsions reçues pour restituer l'information à transmettre.

La source d'impulsions optique 2 comporte les éléments suivants :
- Un émetteur optique 10 pour fournir une onde lumineuse. Cet émetteur est un laser émettant une onde continue.
- Un modulateur optique 12 à commande électrique pour recevoir cette onde lumineuse et pour la transmettre de manière commandée.
- Et un générateur de commande 14 pour fournir un signal de commande de nature électrique commandant ce modulateur. Ce générateur fournit ce signal sous la forme d'une impulsion de commande EP présentant d'abord un front de montée FM à partir d'une valeur de base BV jusqu'à une valeur maximale de signal MV puis un front de descente FD revenant à cette valeur de base. Le modulateur 12 arrête ladite onde lumineuse lorsque ce signal présente cette valeur de base. Il transmet donc l'onde lumineuse sous la forme d'une impulsion optique LP dont la durée est définie par cette impulsion de commande.
Une telle source est incluse dans les connaissances générales des spécialistes lorsque les impulsions optiques à émettre sont beaucoup plus longues que des solitons. La durée de l'impulsion optique est alors sensiblement égale à celle de l'impulsion électrique de commande.

Selon la présente invention, le modulateur 12 est un modulateur à seuil dont une transmittance optique T atteint une valeur appréciable seulement lorsque son signal de commande dépasse un seuil D compris entre les valeurs de base BV et maximale MV de signal. Cette transmittance est le rapport de l'intensité d'un faisceau lumineux de sortie de ce modulateur à celle d'un faisceau lumineux d'entrée ayant donné naissance à un faisceau de sortie. De préférence la valeur du seuil D est comprise entre 50 % et 90 % de la valeur maximale MV à partir de la valeur de base BV et cette transmittance optique varie selon une courbe monotone en S en fonction de la valeur du signal de commande.

Le signal de commande est fourni sous la forme d'une impulsion de commande EP présentant un front de montée FM et/ou un front de descente FD progressifs grâce à quoi l'impulsion optique fournie est plus courte que cette impulsion de commande. Plus particulièrement le signal de commande varie selon une courbe en cloche en fonction du temps.

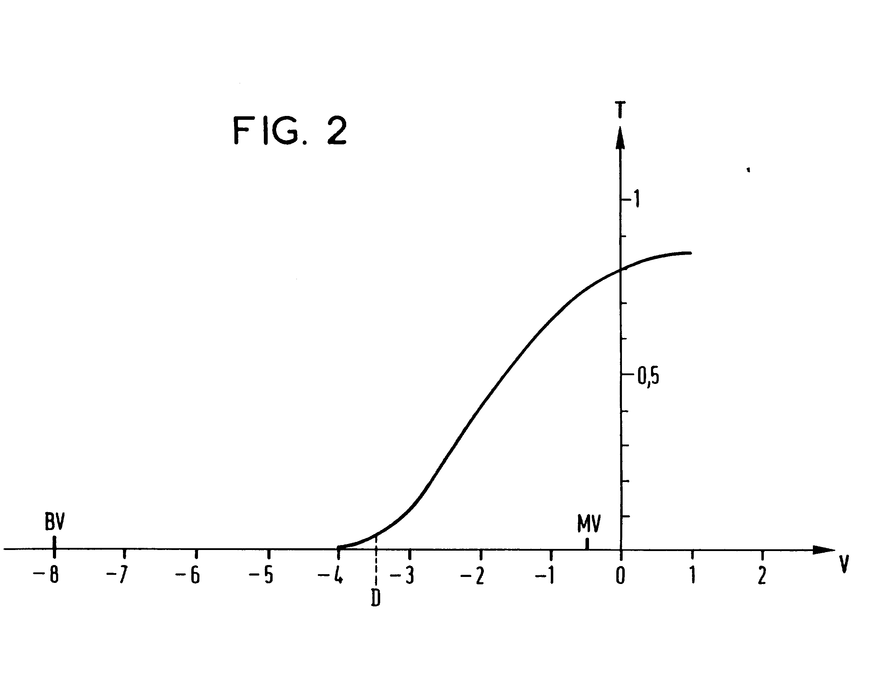

La transmittance optique du modulateur 12 est représentée en ordonnées à la figure 2, la valeur du signal de commande étant portée en abscisses en volts. Pour le seuil D repéré sur cette figure, la valeur de la transmittance optique est de l'ordre de 0,05.

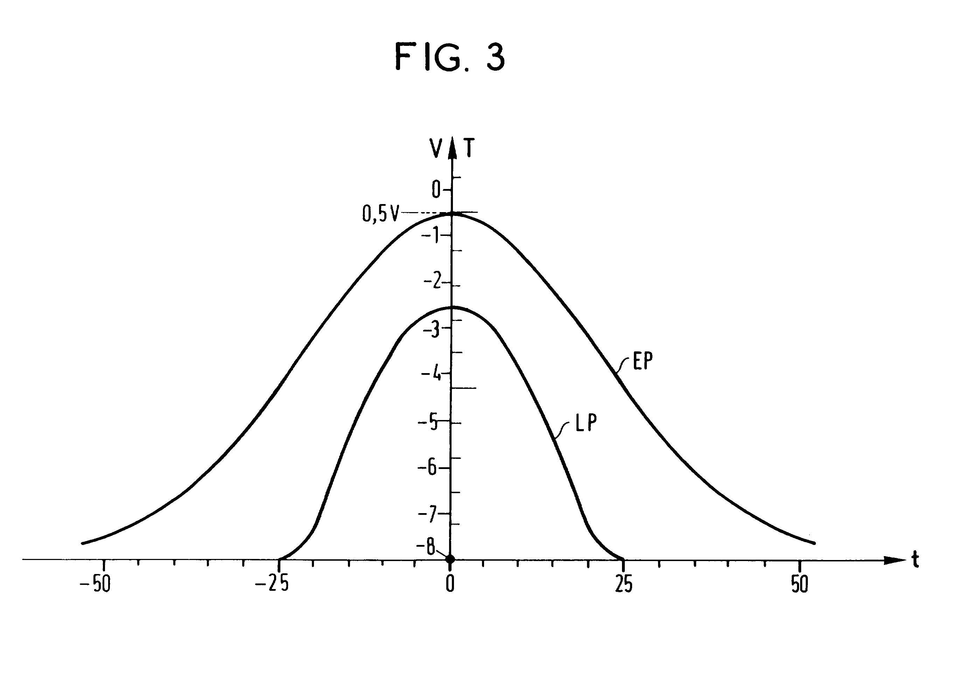

La variation du signal de commande est représentée en volts par le diagramme EP sur la figure 3, le temps étant porté en abscisses en picosecondes. Le diagramme LP représente la forme de l'impulsion optique, qui correspond à la variation de la transmittance T du modulateur car l'intensité de l'onde lumineuse fournie par l'émetteur 10 est constante. L'impulsion optique LP a une durée de 28 ps à mi-hauteur alors que l'impulsion de commande a une largeur de 50 ps à mi-hauteur.

De manière générale, de préférence, le générateur de commande 14 est choisi pour fournir une impulsion de commande EP présentant une durée à mi hauteur inférieure à 80 ps.

Le modulateur 12 est un modulateur à électroabsorption choisi pour que l'utilisation de sa courbe caractéristique à seuil permette de fournir une impulsion optique LP présentant une durée à mi hauteur inférieure à 30 ps. De plus la modulation de phase apportée à cette impulsion par ce modulateur est très petite et telle que le produit de la durée par la largeur spectrale de cette impulsion soit inférieure à 0,8, de préférence à 0,7 ce qui est proche de la limite de transformée de Fourier.

Les caractéristiques d'un tel modulateur peuvent être trouvées dans la thèse de docteur en sciences physiques soutenue par E.BIGAN en Décembre 1991 à la faculté d'Orsay en France.

On comprendra que le générateur de commande 14 peut fournir les impulsions EP de diverses manières, notamment sous la forme d'arches d'un signal sinusoïdal fourni par un oscillateur, utilisées directement pour fournir un signal périodique de commande ou certaines seulement de ces arches étant sélectionnées pour constituer des impulsions de commande de manière à assurer la représentation de l'information à transmettre.

## Revendications

1. Source d'impulsion optique caractérisé par le fait qu'elle comporte un modulateur électro-optique (12) recevant une onde lumineuse et une impulsion de commande (EP) présentant une variation progressive entre une valeur de base (BV) et une valeur maximale (MV) , une transmittance optique (T) de ce modulateur prenant une valeur appréciable seulement lorsque cette impulsion de commande dépasse un seuil (D) compris entre lesdites valeurs de base (BV) et maximale (MV).

2. Source d'impulsion optique selon la revendication 1 comportant
- un émetteur optique (10) pour fournir ladite onde lumineuse,
- ledit modulateur (12) pour recevoir cette onde lumineuse et pour la transmettre de manière commandée,
- et un générateur de commande (14) pour fournir un signal de commande de nature électrique commandant ce modulateur, ce générateur fournissant ce signal sous la forme de ladite impulsion de commande (EP), cette impulsion présentant d'abord un front de montée (FM) à partir de ladite valeur de base (BV) jusqu'à ladite valeur maximale de signal (MV) puis un front de descente (FD) revenant à cette valeur de base,
- ledit front de montée (FM) et/ou ledit front de descente (FD) étant progressif grâce à quoi ladite onde lumineuse est transmise par ledit modulateur sous la forme d'une impulsion optique (LP) plus courte que ladite impulsion de commande.

3. Source selon la revendication 2, caractérisée par le fait que la valeur dudit seuil (D) est comprise entre 50% et 90% de ladite valeur maximale (MV) à partir de ladite valeur de base (BV) du signal de commande.

4. Source selon la revendication 3 caractérisée par le fait que ledit modulateur (12) présente une transmittance optique variant selon une courbe monotone en S en fonction de la valeur dudit signal de commande et ledit signal de commande varie selon une courbe en cloche en fonction du temps.

5. Source selon la revendication 4 caractérisée par le fait que ledit générateur de commande (14) est choisi pour fournir une impulsion de commande (EP) présentant une durée à mi hauteur inférieur à 80 ps.

6. Source selon la revendication 5 caractérisée par le fait que ledit modulateur (12) est un modulateur à électroabsorption choisi pour fournir une impulsion optique (LP) présentant une durée à mi hauteur inférieure à 30 ps et un produit de sa durée par sa largeur spectrale inférieur à 0,8 et de préférence à 0,7.

7. Système de transmission optique à solitons comportant
- une source d'impulsion optique (2) pour fournir sur commande des impulsions optiques (LP),
- un circuit d'entrée (4) recevant une information à transmettre et commandant cette source pour lui faire fournir une succession d'impulsions optiques dans laquelle les intervalles de temps entre les impulsions sont représentatifs de l'information à transmettre,
- une fibre de ligne (6) constituée par une fibre optique de grande longueur recevant ladite succession d'impulsions optiques et présentant d'une part une dispersion chromatique, d'autre part un effet Kerr tels que cette dispersion et cet effet Kerr se compensent mutuellement pour conserver la forme d'une impulsion optique lorsque cette impulsion présente une intensité, une durée et une largeur spectrale caractéristiques d'un soliton de cette fibre,
- et un récepteur (8) recevant les impulsions optiques transmises par ladite fibre de ligne et traitant ces impulsions reçues pour restituer ladite information à transmettre,
ce système étant caractérisé par le fait que ladite source d'impulsions optiques est une source selon la revendication 2 de manière qu'elle fournisse lesdites impulsions optiques sous la forme de dits solitons de ladite fibre de ligne.

8. Système selon la revendication 7 caractérisé par le fait que ledit modulateur de la source d'impulsions optiques est un modulateur à électroabsorption (12).

## Patentansprüche

1. Quelle für optische Pulse, dadurch gekennzeichnet, daß sie einen elektrooptischen Modulator (12) aufweist, der eine Lichtwelle und einen Steuerimpuls (EP) empfängt, der eine progressive Variation zwischen einem Basiswert (BV) und einem maximalen Wert (MV) aufweist, wobei ein optischer Transmissionsfaktor (T) nur dann einen wahrnehmbaren Wert annimmt, wenn dieser Steuerimpuls eine Schwelle (D) überschreitet, die zwischen dem Basiswert (BV) und dem maximalen Wert (MV) liegt.

2. Quelle für optische Pulse nach Anspruch 1, die umfaßt:
- einen optischen Sender (10), um die Lichtwelle bereitzustellen,
- den Modulator (12), um diese Lichtwelle zu empfangen und sie in gesteuerte Weise zu übertragen,
- und einen Steuergenerator (14), um ein Steuersignal elektrischer Natur bereitzustellen, das diesen Modulator steuert, wobei dieser Generator dieses Signal in Form eines Steuerimpulses (EP) bereitstellt, dieser Impuls anfangs eine Anstiegsfront (FM) ausgehend vom Basiswert (BV) bis zum maximalen Signalwert (MV), dann eine Abstiegsfront (FD) aufweist, die zu diesem Basiswert zurückkehrt,
- wobei die Aufstiegsfront (FM) und/oder die Abstiegsfront (FD) progressiv sind, aufgrund dessen die Lichtwelle vom Modulator in Form eines optischen Pulses (LP) übertragen wird, der kürzer als der Steuerimpuls ist.

3. Quelle nach Anspruch 2, dadurch gekennzeichnet, daß der Wert der Schwelle (D) zwischen 50% und 90% des maximalen Wertes (MV) ausgehend vom Basiswert (BV) des Steuersignals liegt.

4. Quelle nach Anspruch 3, dadurch gekennzeichnet, daß der Modulator (12) einen optischen Transmissionsfaktor aufweist, der gemäß einer in S monotonen Kurve in Abhängigkeit vom Wert des Steuersignals variiert, und das Steuersignal gemäß einer Glockenkurve in Abhängigkeit von der Zeit variiert.

5. Quelle nach Anspruch 4, dadurch gekennzeichnet, daß der Steuergenerator (14) so ausgewählt ist, daß er einen Steuerimpuls (EP) bereitstellt, der eine Dauer auf halber Höhe von weniger als 80 ps aufweist.

6. Quelle nach Anspruch 5, dadurch gekennzeichnet, daß der Modulator (12) ein Elektroabsorptionsmodulator ist, der so ausgewählt ist, daß er einen optischen Puls (LP) bereitstellt, der eine Dauer auf halber Höhe von weniger als 30 ps und ein Produkt seiner Dauer mit seiner spektralen Breite von weniger als 0,8 und vorzugsweise 0,7 aufweist.

7. Optisches Solitonübertragungssystem, das aufweist:
- eine Quelle (2) für optische Pulse, um auf Befehl optische Pulse (LP) bereitzustellen,
- eine Eingangsschaltung (4), die eine zu übertragende Information empfängt und diese Quelle steuert, um sie eine Folge von optischen Pulsen bereitstellen zu lassen, in der die Zeitabstände zwischen den Pulsen die zu übertragende Information darstellen,
- eine Leitungsfaser (6), die aus einer Lichtleitfaser mit großer Länge besteht, die die Folge von optischen Pulsen empfängt und einerseits eine chromatische Dispersion, andererseits einen Kerreffekt derart aufweist, daß sich diese Dispersion und dieser Kerreffekt gegenseitig kompensieren, um die Form eines optischen Pulses beizubehalten, wenn dieser Puls eine Intensität, eine Dauer und eine spektrale Breite aufweist, die für einen Soliton dieser Faser charakteristisch sind,
- und einen Empfänger (8), der die von der Leitungsfaser übertragenen optischen Pulse empfängt und diese empfangenen Pulse verarbeitet, um die zu übertragende Information zu rekonstruieren,
dadurch gekennzeichnet, daß die Quelle für optische Pulse eine Quelle nach Anspruch 2 ist, damit sie die optischen Pulse in Form der Solitons der Leitungsfaser bereitstellt.

8. System nach Anspruch 7, dadurch gekennzeichnet, daß der Modulator der Quelle für optische Pulse ein Elektroabsorptionsmodulator (12) ist.

## Claims

1. An optical pulse source characterized by the fact that it includes an electro-optical modulator (12) receiving a light wave and a control pulse (EP) that varies progressively between a base value (BV) and a maximum value (MV). said modulator having optical transmittance (T) that takes a perceptible value only when said control pulse exceeds a threshold (D) lying between said base value (BV) and said maximum value (MV).

2. An optical pulse source according to claim 1 including:
an optical emitter (10) for supplying said light wave:
said modulator (12) for receiving the light wave and transmitting it in controlled manner; and
a control generator (14) for supplying an electrical-type control signal for controlling the modulator, the generator supplying the signal in the form of said control pulse (EP). said pulse having firstly a leading edge (FM) going from said base value (BV) to said maximum signal value (MV) and secondly a trailing edge (FD) returning to the base value;
said leading edge (FM) and/or said trailing edge (FD) sloping progressively. whereby said light wave is transmitted by said modulator in the form of an optical pulse (LP) that is shorter than said control pulse.

3. A source according to claim 2, characterized by the fact that the value of said threshold (D) lies in the range 50% to 90% of said maximum value (MV) starting from said base value (BV) of the control signal.

4. A source according to claim 3, characterized by the fact that the optical transmittance of said modulator (12) varies following a monotonic S-curve as a function of the value of said control signal. and said control signal varies following a bell curve as a function of time.

5. A source according to claim 4, characterized by the fact that said control generator (14) is chosen so as to supply a control pulse (EP) having a half-height duration of less than 80 ps.

6. A source according to claim 5, characterized by the fact that said modulator (12) is an electro-absorption modulator chosen so as to supply an optical pulse (LP) having a half-height duration of less than 30 ps, and the product of its duration multiplied by its spectrum width being less than 0.8 and preferably less than 0.7.

7. A soliton optical transmission system including:
an optical pulse source (2) for supplying optical pulses (LP) on command;
an input circuit (4) receiving data to be transmitted and controlling the source such that it supplies a succession of optical pulses, in which succession the time intervals between the optical pulses are representative of the data to be transmitted;
a line fiber (6) constituted by a very long optical fiber receiving said succession of optical pulses, and having both chromatic dispersion and a Kerr effect such that the dispersion and the Kerr effect compensate each other to maintain the shape of an optical pulse when the optical pulse has intensity, duration and spectrum width that are characteristic of a soliton in the fiber; and
a receiver (8) receiving the optical pulses transmitted by said line fiber and processing the received pulses to retrieve said data to be transmitted;
the system being characterized by the fact that said optical pulse source is a source according to claim 2 such that it supplies said optical pulses in the form of said solitons of said line fiber.

8. A system according to claim 7, characterized by the fact that said modulator in the optical pulse source is an electro-absorption modulator (12).
